# EUROPÄISCHE PATENTANMELDUNG

(11) **EP 0 974 538 A1**
(43) Veröffentlichungstag der Anmeldung: **26.01.2000**
(21) Anmeldenummer: 98113659.1
(22) Anmeldetag: 22.07.1998
(51) Int. Cl.: B65G 19/02, B65G 15/48

(54) **Transportvorrichtung mit einer geschlossenen, umlaufenden Einrichtung**

(71) Anmelder: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(57) **Zusammenfassung**

Bei einer Transportvorrichtung (1) mit einer geschlossenen, umlaufenden Einrichtung (2), z.B. einem Becherband (19) zum Transportieren von Gegenständen, insbesondere zwischen Verpackungsstationen (4, 5, 6, 7), mit zwei Umlenkeinrichtungen (8), sowie einem Antrieb (9) zum getakteten Antreiben der Einrichtung (2) ist als Material (16) für die Einrichtung (2) und die Umlenkeinrichtungen (8) eine Magnesiumlegierung (17), z.B. Mg Al9 Zn1 (21) vorgesehen, und zumindest die Einrichtung (2) ist mit einer chemisch inerten Oberfläche (18) versehen. Infolge der mechanischen und dynamischen Eigenschaften der Magnesiumlegierung (17) sind extrem schnelle Transportvorgänge erreichbar. Durch die chemisch inerte Oberfläche (18) kann die Transportvorrichtung (1) auch für den Transport chemisch aktiver Substanzen eingesetzt werden.

## Beschreibung

Die Erfindung betrifft eine Transportvorrichtung mit einer geschlossenen, umlaufenden Einrichtung zum Transportieren von Gegenständen, insbesondere zwischen Verpackungsstationen mit zwei Umlenkeinrichtungen zum Umlenken der Einrichtung, sowie einem Antrieb zum Antreiben der Einrichtung.

Bei bekannten Transporteinrichtungen dieser Art wird Stahl als Material für die Transportvorrichtung verwendet Als umlaufende Einrichtung werden Bänder aus elastischem Material oder Ketten genutzt. Als Antriebe dienen Elektromotoren. Die umlaufende Einrichtung wird z.B. um Räder als Umlenkeinrichtungen geführt, wobei ein Rad axial angetrieben wird.

Die verwendeten Materialien sind chemisch inert und werden durch Kontakt mit dem zu transportierendem Gut nicht angegriffen. Ein Kontakt kann vorkommen, wenn z.B. ein transportierter Beutel undicht ist, und in ihm enthaltendes Gut, z.B. eine saure Flüssigkeit, austritt.

Die bekannten Transporteinrichtungen haben den Nachteil, daß sie für einen extrem schnellen, getakteten Transport nicht geeignet sind. Stahl hat eine Dichte von 6,3 bis 8,1 kg/dm³ und ein entsprechend hohes Massenträgheitsmoment. Ein extrem schnelles Anfahren und wieder Anhalten bei einem Arbeitstakt würde einen sehr leistungsstarken und damit teuren Antrieb erfordern.

Aluminium als Material ist zwar deutlich leichter als Stahl, erfüllt aber ebenfalls nicht die Anforderungen an ein ausreichend niedriges Massenträgheitsmoment.

Massenreduzierungen sind aus Stabilitätsgründen, insbesondere bei extrem schnellen Betrieb nicht beliebig realisierbar. Diverse Kunststoffe haben zwar eine relativ geringe Dichte, sind aber entweder nicht steif genug oder haben eine zu geringe Härte, um für eine stabile, extrem schnelle Transportvorrichtung zu dienen.

Der Erfindung liegt die Aufgabe zu Grunde, eine Transporteinrichtung der eingangs beschriebenen Art zu finden , die für eine extrem schnelle, getaktete Arbeitsweise bei relativ kleiner Antnebsleistung geeignet ist, und der chemisch aktive Substanzen nicht schaden.

Gelöst ist die Aufgabe gemäß dem kennzeichnenden Teil des Anspruchs 1. Danach ist als Material für die Einrichtung und die Umlenkeinrichtungen eine Magnesiumlegierung vorgesehen, und zumindest die Einrichtung ist mit einer chemisch inerten Oberfläche oder Beschichtung versehen.

Die erfindungsgemäße Transportvorrichtung hat den Vorteil, daß mit ihr extrem hohe Beschleunigungen ausgeführt werden können, da die Magnesiumlegierung mit einer Dichte von 1,7 kg/dm³ ein relativ geringes Massenträgheitsmoment aufweist. So kann auch eine relativ aufwendige Transportvorrichtung extrem schnell und mit relativ geringer Antriebsleistung beschleunigt werden. Es ist eine Höchstleistungstransportvorrichtung erreichbar. Durch eine Verringerung der Beschleunigungskräfte wird die Antriebsmechanik einfacher. Die Antriebsmechanik und der Antrieb werden kostengünstiger.

Die Steifigkeit der Magnesiumlegierung ist mit 4,4 · 10¹⁰ N/m² für die schnelle Transportvorrichtung ausreichend.

Durch die Verwendung einer Magnesiumlegierung, sowohl für die Einrichtung, als auch für die Umlenkeinrichtungen, ist das gesamte Trägheitsmoment der Transportvornchtung minimiert.

Eine Magnesiumlegierung ist mit einer Brinellhärte von 200 bis 300 relativ hart und erfüllt auch diesbezüglich die Anforderungen an eine Höchstleistungstransportvorrichtung.

Dadurch, daß die Magnesiumlegierung mit einer chemisch inerten Oberfläche oder Beschichtung versehen ist, ist ein Schutz der Magnesiumlegierung gegenüber chemisch aktiven Substanzen, z.B. Säuren, erreicht.

Weitere vorteilhafte Ausgestaltungen der erfindungsgemäßen Transportvornchtung sind in den Ansprüchen 2 bis 12 beschrieben.

Ist die Einrichtung ein Becherband mit einer Vielzahl von Mitnehmern, und ist als Matenal für die Mitnehmer ebenfalls eine Magnesiumlegierung vorgesehen (Anspruch 2), so ist zweierlei erreicht. Zum einen können zu transportierende Gegenstände durch die Mitnehmer besser und ortsgenauer beschleunigt werden. Zum anderen ist das Massenträgheitsmoment der Mitnehmer relativ gering, so daß das Becherband mit vergleichsweise geringer Antriebsleistung relativ stark beschleunigt werden kann.

Wenn relativ niedrige Gegenstände mittels niedriger Mitnehmer und relativ hohe Gegenstände mittels hoher Mitnehmer mitgenommen werden, ist die für die Mitnehmer notwendige Masse fallweise minimierbar. Sind die Mitnehmer austauschbar an der Einrichtung befestigt (Anspruch 3), so können an der Transportvorrichtung bei Transport anderer Gegenstände die Mitnehmer entsprechend angepaßt werden.

Mit einer eloxierten Oberfläche der Magnesiumlegierung (Anspruch 4) ist ein sicherer Schutz der Magnesiumlegierung erreicht. Es ist für viele Einsatzfälle ausreichend, nur die Einrichtung zu schützen, da diese hauptsächlich mit dem Produkt in Kontakt kommen kann. Für PTFE als Beschichtung (Anspruch 5) gilt das Gleiche. PTFE hat darüber hinaus den Vorteil, daß sein Reibungskoeffizient sehr niedrig ist, und dadurch das Einsetzen von Gegenständen in die Becher eines Becherbandes, sowie das Entfernen der Gegenstände daraus schnellstens erfolgen kann. Dadurch wird ein extrem schneller Transportvorgang in wichtiger Weise unterstützt.

Als Magnesiumlegierung eignen sich sowohl Mg Ag3 Se2 Zr1 (Anspruch 6) als auch Mg Al8 Zn1 und Mg Al9 Zn1 (Anspruch 7). Mg Ag3 Se2 Zr1 enthält 3% Silber, 2% Selen und 1% Zirkonium und wird auch als MSR-Legierung bezeichnet. Mg Al9 Zn1 enthält 9% Aluminium und 1% Zink, Mg Al8 Zn1 dagegen 8% Aluminium und 1% Zink. Diese Legierungen erfüllen sehr gut alle zuvor beschriebenen Eigenschaften einer Magnesiumlegierung und haben darüber hinaus eine relativ hohe Stabilität bezüglich schnellen Lastwechseln, was für schnellste Beschleunigungen bei geringer Masse sehr wichtig ist.

Die Herstellung eines Bauteils aus einer Magnesiumlegierung erfolgt in kostengünstiger Weise als Gußteil (Anspruch 8). Als Bauteile sind hierzu die Einnchtung, die Mitnehmer oder die Umlenkeinrichtungen geeignet.

Mit einem elektromagnetischen Linearantrieb (Linearmotor) als Antneb für die Transportvomchtung (Anspruch 9) können Beschleunigungen bis zum Zwanzigfachen der Erdbeschleunigung realisiert werden. Infolge des geringen Trägheitsmoments der Magnesiumlegierung können auch relativ leistungsschwache Linearmotoren eingesetzt werden, so daß auch eine kostengünstige technische Realisierung des Antriebs erreicht ist.

Wirkt der Linearantrieb gegen einen an der Einrichtung vorgesehenen Nocken, und ist eine Vielzahl an Nocken äquidistant an der Einrichtung vorgesehen (Anspruch 10), so kann durch eine Auslenkung des Linearantriebs die Einrichtung um einen Takt weiterbewegt werden. Nach Zurückstellen des Linearantriebs kann ein nachfolgender Nocken vom Linearantrieb erfaßt werden. Das Erfassen und Weiterschieben der Einrichtung wird optimiert, wenn analog Anspruch 11 zwei Linearantriebe vorgesehen sind, wobei der eine Linearantrieb mit einem beweglichen Teil gegen einen Nocken wirkt, und mit einem statischen Teil an einem beweglichen Teil des anderen Linearantriebs befestigt ist, und die Antriebsrichtungen der beiden Linearantriebe senkrecht zueinander verlaufen.

Während der eine Linearantneb für das Weiterschieben der Einrichtung sorgt, besorgt der andere Linearantrieb das Ansetzen der ersten Linearantriebs senkrecht auf die Einrichtung zu und hinter einen Nocken. Beide Bewegungen können überlagert werden, um damit das Ansetzen des ersten Linearantriebs an einen Nocken noch schneller durchzuführen. Zudem sind die Linearantriebe sehr ortsgenau einsetzbar.

Ist an jedem Mitnehmer eine Bodenplatte vorgesehen, sind die Bodenplatten über Gelenke miteinander verbunden, und dient jeweils eine Magnesiumlegierung als Matenal für die Bodenplatten und die Gelenke (Anspruch 12) so können einerseits zu transportierende Gegenstände auf den Bodenplatten transportiert werden, und anderseits ist das Trägheitsmoment der Transportvorrichtung relativ klein.

Im folgenden wird die Erfindung an Hand von Ausführungsbeispiele darstellenden Figuren näher beschrieben. Es zeigt:

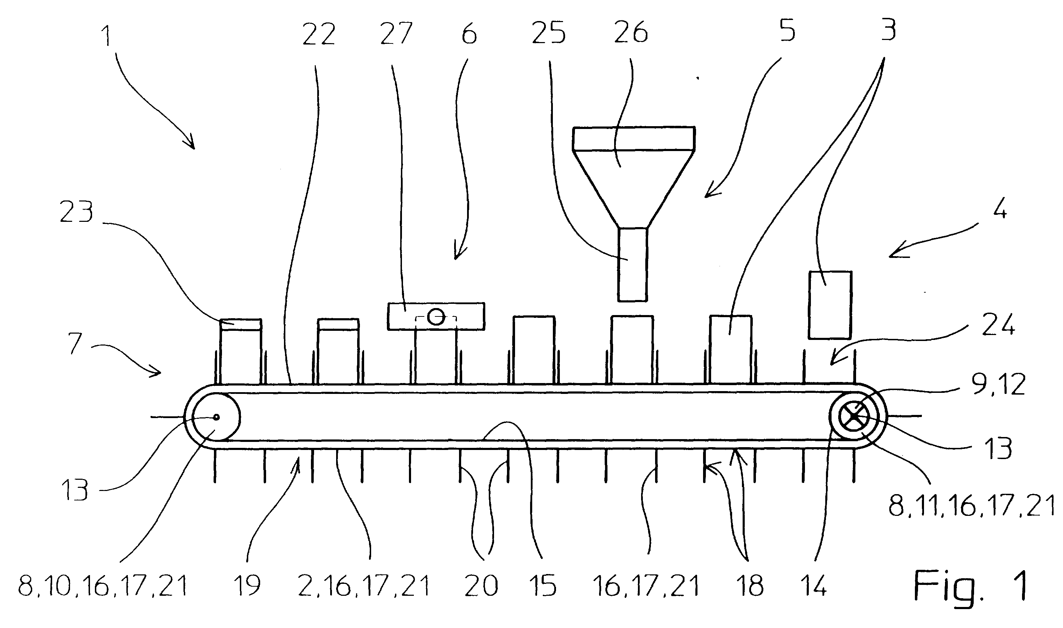

- Figur 1: in einer Seitenansicht eine Transportvorrichtung für Beutel, mit einer geschlossenen, um zwei Räder umlaufenden, als Becherband mit Mitnehmem ausgestalteten Einrichtung zum Transportieren, mit einem Antneb an einem Rad, einer Befüllstation und einer Schweißstation zum Befüllen und Verschweißen der Beutel, wobei die Einnchtung, die Mitnehmer und die Räder aus einer Magnesiumlegierung bestehen, um eine sehr schnelle, getaktete Weiterbewegung der Beutel zu erreichen, sowie

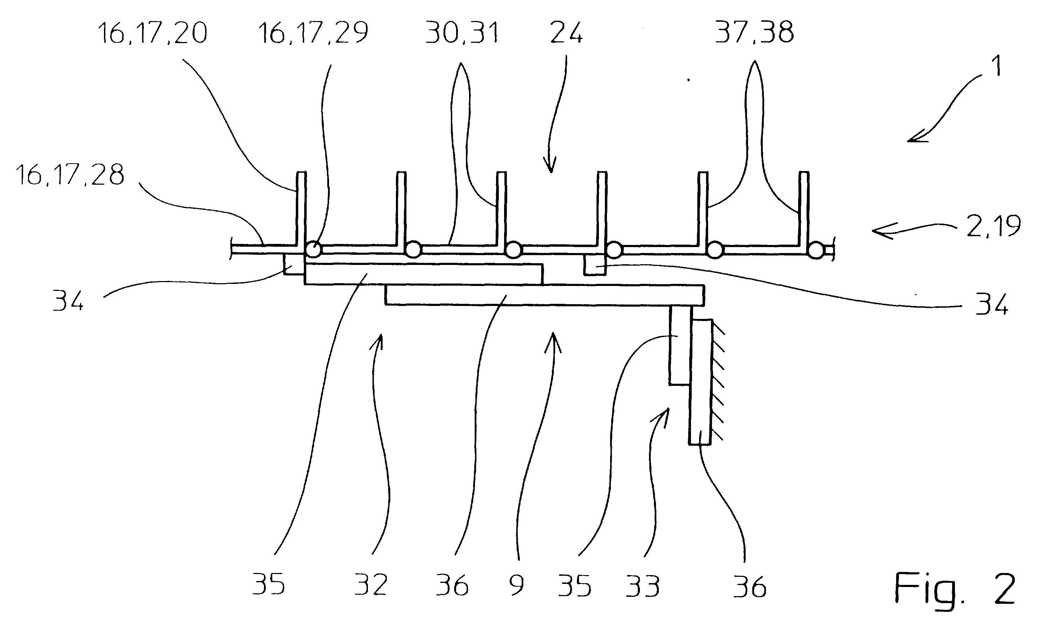

- Figur 2: in einer Seitenansicht einen Teil eines umlaufenden Becherbandes, wobei das Becherband aus einer Vielzahl von Mitnehmem, Bodenplatten und Gelenken und aus einer Magnesiumlegierung besteht, mit Nocken unterhalb des Becherbandes und mit zwei elektromagnetischen Linearantrieben zum extrem schnellen getakteten Weiterbewegen der Beutel, wobei ein Linearantrieb die Einrichtung weiterbewegt, und der andere Linearantrieb den ersten Linearantrieb gegen das Becherband setzt und von diesem wieder zurückstellt.

Bei einer Transportvorrichtung 1 mit einer geschlossenen, umlaufenden Einrichtung 2 zum taktweisen Transportieren von Beuteln 3 von einer Einsetzstation 4 über eine Befüllstation 5 und eine Schweißstation 6 zu einer Abgabestation 7 sind zwei Räder 10, 11 als Umlenkeinrichtungen 8 zum Umlenken der Einrichtung 2, sowie ein Antrieb 9 zum getakteten Antreiben der Einrichtung 2 vorgesehen (Figur 1). Der Antneb 9 ist ein Servoantrieb 12 und treibt die Achse 13 des Rades 11 an. Die Mantelflächen 14 der Räder 10, 11 sind in formschlüssigem Kontakt mit der Innenfläche 15 der Einrichtung 2. Als Material 16 für die Einrichtung 2 und die Umlenkeinrichtungen 18 ist eine Magnesiumlegierung 17 vorgesehen. Die Einrichtung 2 ist mit einer chemisch inerten Oberfläche 18 versehen. Die Oberfläche 18 der Magnesiumlegierung 17 ist eloxiert und damit bei einem nicht gewollten Kontakt mit dem sauren, in den Beuteln 3 befindlichen Produkt, vor einer die Magnesiumlegierung 17 zersetzenden chemischen Reaktion geschützt.

Die Einrichtung 2 ist ein Becherband 19 mit zwei parallelen Ketten 22 und einer Vielzahl von Mitnehmem 20 zwischen den Ketten 22. Als Matenal 16 für die Mitnehmer 20 dient ebenfalls eine Magnesiumlegierung 17. Die Magnesiumlegierung 17 für das Becherband 19 und die Räder 10, 11 ist Mg Al9 Znl 21.

Durch ein taktweises Antreiben der Transportvorrichtung 1 durch den als Servoantrieb 12 ausgestalteten Antrieb 9 wird das Becherband 19 um jeweils eine Becherbreite weiterbewegt. An der Einsetzstation 4 werden leere, oben offene Beutel 3 in die Becher 24 eingesetzt. An der Befüllstation 5 werden die Beutel 3 durch ein Füllrohr 25 mit Produkt aus einem Vorratsbehälter 26 befüllt. Sodann werden die Beutel 3 an der Schweißstation 6 mittels gegeneinander pressbarer Schweißbacken 27 kopfseitig verschweißt, wobei eine Siegelnaht 23 erzeugt wird. Und schließlich werden die Beutel 3 an einer Abgabestation 7 vom Becherband 19 durch Schwerkraft abgegeben. Sie könnten auch aus den Bechem 24 herausgeschoben werden.

Wegen des geringen Massenträgheitsmoments der Magnesiumlegierung 17 ist die Transportvorrichtung 1 extrem schnell beschleunigbar, so daß der Weitertransport der Beutel 3 nach erfolgter Verschweißung extrem schnell erfolgt. Die Masse der Transportvorrichtung 1 ist weiter minimiert, da die Magnesiumlegierung 17 relativ dünn ausgestaltet ist. Dies ist wegen ihrer guten Steifigkeit und ihrer relativ großen Härte möglich.

Beim Ausführungsbeispiel der Figur 2 ist beim Becherband 19 an jedem Mitnehmer 20 eine Bodenplatte 28 zum Aufnehmen eines Beutels vorgesehen. Die Bodenplatten 28 sind über Gelenke 29 miteinander verbunden. Als Material 16 für die Bodenplatten 28, die Mitnehmer 20 und die Gelenke 29 dient eine Magnesiumlegierung 17. Jeweils ein Mitnehmer 20 und eine Bodenplatte 28 sind einstückig als ein Bauteil 30 und als Gußteil 31 ausgeführt. Die Mitnehmer 20 weisen PTFE 37 als Beschichtung 38 auf, wodurch ein in einem Becher 24 eingesetzter Beutel dort weniger Reibung erfährt. Als Antneb 9 für das Becherband 19 dienen zwei elektromagnetische Linearantriebe 32, 33. Am Becherband 19 ist äquidistant eine Vielzahl an Nocken 34 angebracht. Der eine Linearantrieb 32 wirkt mit seinem beweglichen Teil 35 gegen einen Nocken 34 und ist mit seinem statischen Teil 36 am beweglichen Teil 35 des anderen Linearantnebs 33 befestigt. Das statische Teil 36 des Linearantneb 33 ist ortsfest. Die Antnebsnchtungen der beiden Linearantnebe 32, 33 verlaufen senkrecht zueinander.

Die Funktion des Antriebs 9 ist folgende:
Nachdem der Linearantrieb 32 durch Auslenkung seines beweglichen Teils 35 nach links das Becherband 19 nach links verschoben hat, wird das bewegliche Teil 35 des anderen Linearantriebs 33 soweit nach unten gefahren, daß das bewegliche Teil 35 des Linearantriebs 32 unterhalb der Nocken 34 zu liegen kommt. Dann wird das bewegliche Teil 35 des Linearantriebs 32 nach rechts bewegt, dann durch Betätigung des Linearantnebs 33 nach oben, und derart kommt das bewegliche Teil 35 des Linearantriebs 32 in Kontakt mit dem nächsten Nocken 34, so daß das Becherband 19 ein weiteres Stück nach links geschoben werden kann. Infolge des geringen Massenträgheitsmoments des Becherbandes 19 und der extrem schnellen Beschleunigung der Linearantnebe 32, 33 sind extrem kurze Verschiebungszeiten erreichbar.
- 1: Transportvorrichtung
- 2: umlaufende Einrichtung
- 3: Beutel
- 4: Einsetzstation
- 5: Befüllstation
- 6: Schweißstation
- 7: Abgabestation
- 8: Umlenkeinrichtung
- 9: Antrieb
- 10, 11: Rad
- 12: Servoantrieb
- 13: Achse
- 14: Mantelfläche
- 15: Innenfläche
- 16: Material
- 17: Magnesiumlegierung
- 18: inerte Oberfläche
- 19: Becherband
- 20: Mitnehmer
- 21: Mg Al9 Zn1
- 22: Kette
- 23: Siegelnaht
- 24: Becher
- 25: Füllrohr
- 26: Vorratsbehälter
- 27: Schweißbacke
- 28: Bodenplatte
- 29: Gelenk
- 30: Bauteil
- 31: Gußteil
- 32, 33: Linearantrieb
- 34: Nocken
- 35: bewegliches Teil
- 36: statisches Teil
- 37: PTFE
- 38: Beschichtung

## Patentansprüche

1. Transportvorrichtung mit einer geschlossenen, umlaufenden Einrichtung zum Transportieren von Gegenständen, insbesondere zwischen Verpackungsstationen, mit zwei Umlenkeinrichtungen zum Umlenken der Einrichtung, sowie einem Antrieb zum getakteten Antreiben der Einrichtung, dadurch gekennzeichnet, daß als Material (16) für die Einrichtung (2) und die Umlenkeinrichtungen (8) eine Magnesiumlegierung (17) vorgesehen ist, und daß zumindest die Einrichtung (2) mit einer chemisch inerten Oberfläche (18) oder Beschichtung (38) versehen ist.

2. Transportvorrichtung nach Anspruch 1, dadurch gekennzeichnet, daß die Einrichtung (2) ein Becherband (19) mit einer Vielzahl von Mitnehmem (20) ist, und daß als Material (16) für die Mitnehmer (20) eine Magnesiumlegierung (17) vorgesehen ist.

3. Transportvorrichtung nach Anspruch 2, dadurch gekennzeichnet, daß die Mitnehmer austauschbar an der Einrichtung befestigt sind.

4. Transportvorrichtung nach Anspruch 1, Anspruch 2 oder Anspruch 3, dadurch gekennzeichnet, daß die Oberfläche (18) der Magnesiumlegierung (17) eloxiert ist.

5. Transportvomchtung nach Anspruch 1, Anspruch 2 oder Anspruch 3, dadurch gekennzeichnet, daß als Beschichtung (38) PTFE (37) vorgesehen ist.

6. Transportvomchtung nach Anspruch 1, Anspruch 2, Anspruch 4 oder Anspruch 5, dadurch gekennzeichnet, daß als Magnesiumlegierung Mg Ag3 Se2 Zr1 vorgesehen ist.

7. Transportvornchtung nach Anspruch 1, Anspruch 2, Anspruch 4 oder Anspruch 5, dadurch gekennzeichnet, daß als Magnesiumlegierung (17) Mg Al9 Zn1 (21) oder Mg AI8 Zn1 vorgesehen ist.

8. Transportvorrichtung nach Anspruch 1, Anspruch 2, Anspruch 6 oder Anspruch 7, dadurch gekennzeichnet, daß mindestens ein Bauteil (30) für die Einrichtung (2), die Mitnehmer (20) oder die Umlenkeinnchtungen (8) ein Gußteil (31) ist.

9. Transportvorrichtung nach Anspruch 1, Anspruch 2, Anspruch 6 oder Anspruch 7, dadurch gekennzeichnet, daß der Antneb (9) ein elektromagnetischer Linearantneb (32, 33) ist.

10. Transportvorrichtung nach Anspruch 9, dadurch gekennzeichnet, daß der Linearantrieb (32) gegen einen Nocken (34) an der Einrichtung (2) wirkt, und daß eine Vielzahl von Nocken (34) äquidistant an der Einrichtung (2) vorgesehen ist.

11. Transportvorrichtung nach Anspruch 10, dadurch gekennzeichnet, daß zwei Linearantriebe (32, 33) vorgesehen sind, wobei der eine Linearantrieb (32) mit einem beweglichen Teil (35) gegen einen Nocken (34) wirkt und mit einem statischen Teil (36) an einem beweglichen Teil (35) des anderen Linearantriebs (33) befestigt ist, und daß die Antriebsrichtungen der beiden Linearantriebe (32, 33) senkrecht zueinander verlaufen.

12. Transportvorrichtung nach Anspruch 2, dadurch gekennzeichnet, daß an jedem Mitnehmer (20) eine Bodenplatte (28) vorgesehen ist, daß die Bodenplatten (28) über Gelenke (29) miteinander verbunden sind, und daß jeweils eine Magnesiumlegierung (17) als Material (16) für die Bodenplatten (28) und die Gelenke vorgesehen ist.
